# EUROPEAN PATENT APPLICATION

(11) **EP 4 768 329 A1**
(43) Date of publication of application: **01.07.2026**
(21) Application number: 25223773.0
(22) Date of filing: 16.12.2025
(51) Int. Cl.: B60N 2/28

(54) **ANTI-REVERSE MOUNTING BASE STRUCTURE**

(30) Priority: 24.12.2024 CN 202411916341
(71) Applicant: Maxi Miliaan B.V., 5704 RD Helmond (NL)
(72) Inventor: Lu, Dequan, Henglan, Zhongshan, Guandong (CN); Zhou, Junming, Henglan, Zhongshan, Guangdong (CN)
(74) Representative: Veldman-Dijkers, Cornelia G. C.

(57) **Abstract**

Disclosed is an anti-reverse mounting base structure for an infant vehicle seat including the base structure and a placement structure like an infant seat or an infant carrier. The placement structure is mounted on the base structure. The base structure includes a chassis and a rotating assembly provided with a pressure block assembly. The pressure block assembly is mounted movably up and down on the rotating assembly. When the placement structure is mounted on the base structure, it drives the pressure block assembly to move downward. The chassis is provided with a mounting slot and forms a blocking surface. The mounting slot is configured to engage with the pressure block assembly moving downward to mount the placement structure on the base structure. The blocking surface is configured to prevent the pressure block assembly from moving downward, thereby restricting the placement structure from being mounted on the base structure. When the placement structure is oriented correctly, it is mounted by a downward movement of the pressure block assembly engaging with the mounting slot of the chassis. When the placement structure is oriented incorrectly, the blocking surface restricts the downward movement of the pressure block assembly, thereby preventing the placement structure from being placed on the base structure.

## Description

### FIELD OF THE INVENTION

The present invention relates to the technical field of safety seats, and in particular, to an anti-reverse mounting base structure.

### BACKGROUND OF THE INVENTION

Among automotive safety seats, infant seats or infant carriers are detachably mounted on a base structure; however, they are easily oriented in a reverse direction by mistake when being mounted on the base structure. Such reverse mounting can lead to safety incidents during use. Therefore, an anti-reverse mounting base structure is designed to offer a solution that saves both time and effort.

### SUMMARY OF THE INVENTION

To solve one of the problems existing in the prior art to a certain extent, the present invention is intended to propose an anti-reverse mounting base structure, which ensures that a placement structure is mounted on a base in a correct orientation, thereby avoiding situations where the placement structure is mounted in an incorrect direction or in reverse to cause safety accidents.

The aforementioned objective is achieved through the following technical solutions:
an anti-reverse mounting base structure for an infant vehicle seat including the base structure and a placement structure like an infant seat or an infant carrier, where the placement structure is detachably mountable on the base structure; which base structure comprises a chassis and a rotating assembly provided with a pressure block assembly, which pressure block assembly is mounted movably up and down on the rotating assembly, which chassis is provided with a mounting slot and a blocking surface, whereby when mounting the placement structure on the base structure, the pressure block assembly is opposite the mounting slot or the blocking surface, wherein the mounting slot is configured to engage with the pressure block assembly moving downward by placement structure to mount the placement structure on the base structure, and wherein the blocking surface is configured to prevent the pressure block assembly from moving downward by the placement structure, thereby restricting the placement structure from being mounted on the base structure.

As a further improvement of the present invention, the pressure block assembly includes a pressure block and a driving block; the driving block is disposed above the pressure block, with one end of the driving block facing the placement structure and the other end thereof in contact with the pressure block; and the driving block is configured to come into contact with the placement structure and drive the pressure block to move downward.

As a further improvement of the present invention, the rotating assembly includes a base cover body and a turntable connected with each other; the turntable is disposed at an end close to the chassis; the pressure block is disposed at the turntable; and the driving block is disposed at the base cover body.

As a further improvement of the present invention, a pressure block seat is provided at the turntable, and the pressure block is mounted movably up and down on the pressure block seat; and a driving block seat is provided at the base cover body, and the driving block is mounted movably up and down on the driving block seat.

As a further improvement of the present invention, a first reset spring is provided at the pressure block seat, with one end of the first reset spring in contact with the pressure block seat and the other end thereof in contact with the pressure block to drive the pressure block to move upward.

As a further improvement of the present invention, a second reset spring is provided at the driving block seat, with one end of the second reset spring in contact with the driving block seat and the other end thereof in contact with the driving block to drive the driving block to move upward.

As a further improvement of the present invention, the turntable is rotatably mounted on the chassis, and a wall of the mounting slot abuts against the pressure block to restrict the turntable from rotating.

As a further improvement of the present invention, the mounting slot is arc-shaped with an arc angle of 180° to 270°.

As a further improvement of the present invention, the blocking surface is arc-shaped with an arc angle of 90 to 180°.

Compared with the prior art, the present invention has the following beneficial effects:
1. for the anti-reverse mounting base structure proposed by the present invention, when the placement structure is oriented correctly, it is mounted by a downward movement of the pressure block assembly engaging with the mounting slot of the chassis; and when the placement structure is oriented incorrectly, the blocking surface restricts the downward movement of the pressure block assembly, thereby preventing the placement structure from being placed on the base structure. This ensures that the placement structure is mounted on the base structure in a correct orientation, thereby avoiding situations where the placement structure is mounted in an incorrect direction or in reverse to cause safety accidents.

### BRIEF DESCRIPTION OF THE DRAWINGS

FIG. 1 is a schematic perspective structural view of an anti-reverse mounting base structure according to an embodiment;
FIG. 2 is a schematic perspective exploded view of the anti-reverse mounting base structure as shown in FIG. 1;
FIG. 3 is a schematic structural top view of a chassis of the anti-reverse mounting base structure as shown in FIG. 1;
FIG. 4 is a schematic perspective structural view of a turntable of the anti-reverse mounting base structure as shown in FIG. 1;
FIG. 5 is a schematic perspective structural view of a pressure block of the anti-reverse mounting base structure as shown in FIG. 1;
FIG. 6 is a sectional perspective view of a pressure block being pressed downward at a pressure block seat of the anti-reverse mounting base structure as shown in FIG. 1;
FIG. 7 is a partially perspective schematic view of a base cover body of the anti-reverse mounting base structure as shown in FIG. 1;
FIG. 8 is a schematic perspective structural view of a driving block and a driving block seat of the anti-reverse mounting base structure as shown in FIG. 1;
FIG. 9 is a schematic structural view of a driving block of the anti-reverse mounting base structure as shown in FIG. 1;
FIG. 10 is a schematic view of a placement structure mounted in reverse on base structure as shown in FIG. 1;
FIG. 11 is an enlarged view of a position A as shown in FIG. 10;
FIG. 12 is a schematic view of a placement structure having not been mounted on a base structure as shown in FIG. 1;
FIG. 13 is an enlarged view of a position B as shown in FIG. 12;
FIG. 14 is a schematic view of a placement structure having been mounted on a base structure as shown in FIG. 1; and
FIG. 15 is an enlarged view of a position C as shown in FIG. 14.

### DESCRIPTION OF PREFERRED EMBODIMENTS

The following embodiments illustrate the present invention, but the present invention is not limited by these embodiments. Modifications to the implementation manners of the invention or equivalent replacements of some technical features without departing from the spirit of the invention should fall within the protection scope of the technical solutions claimed by the present invention.

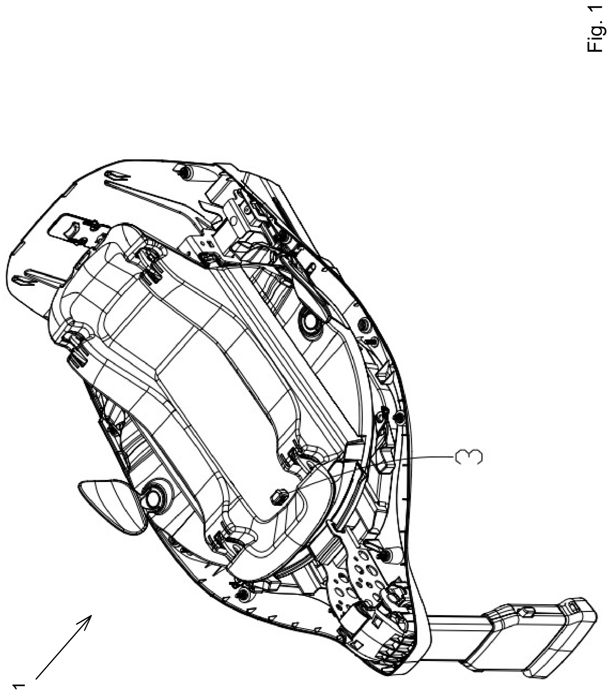

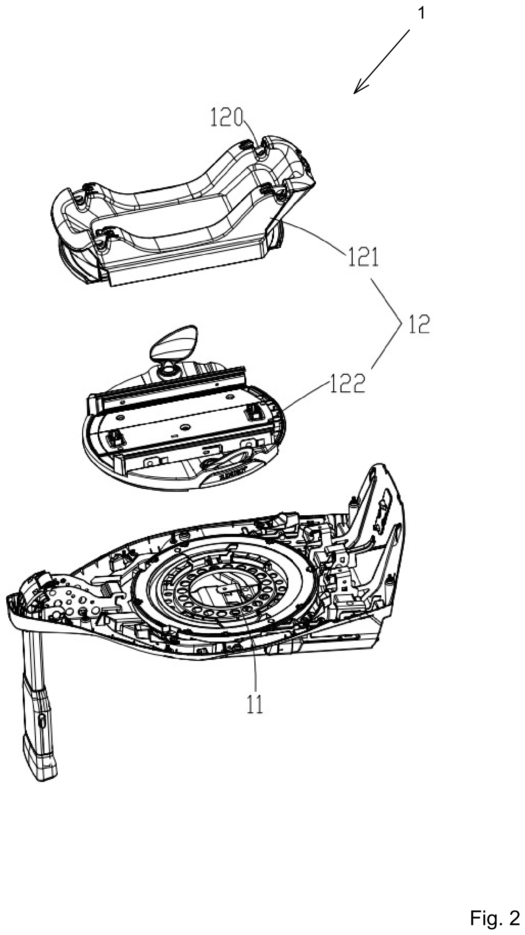

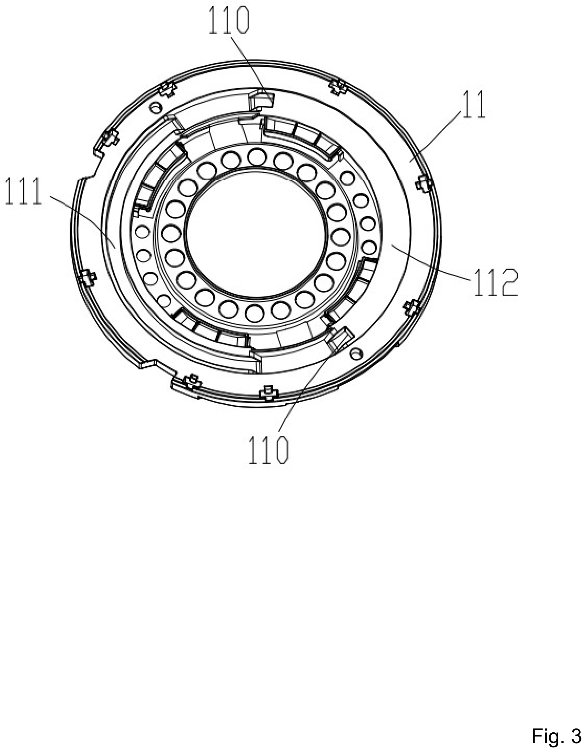

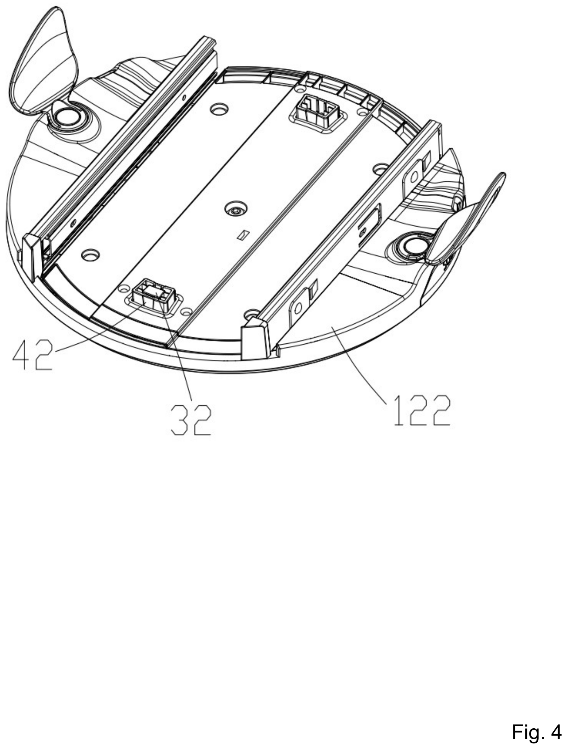

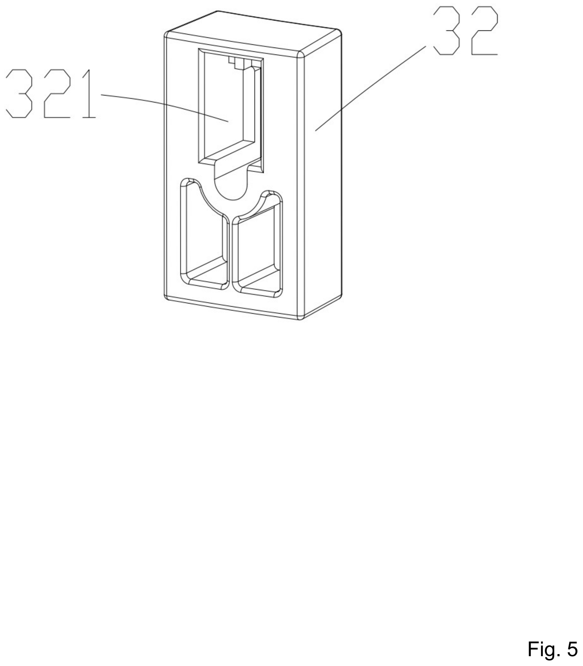

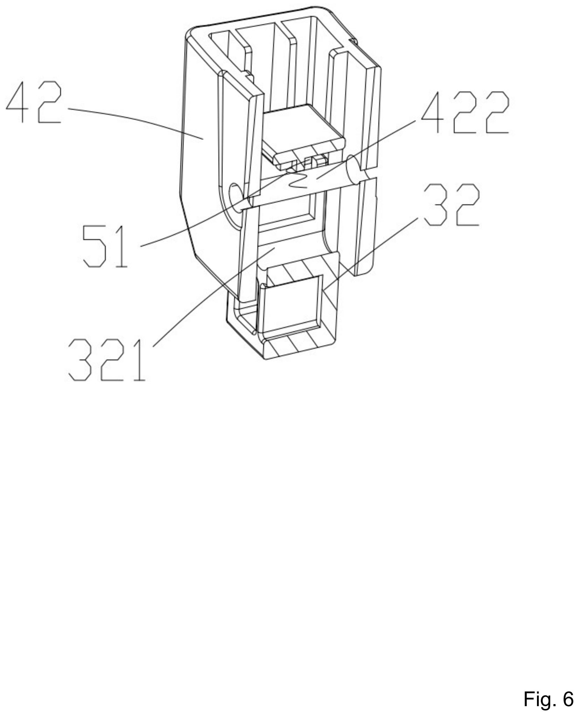

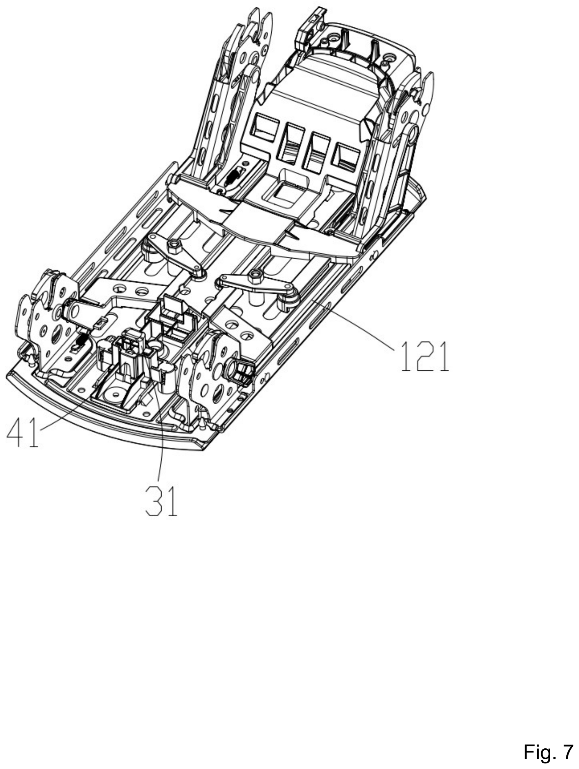

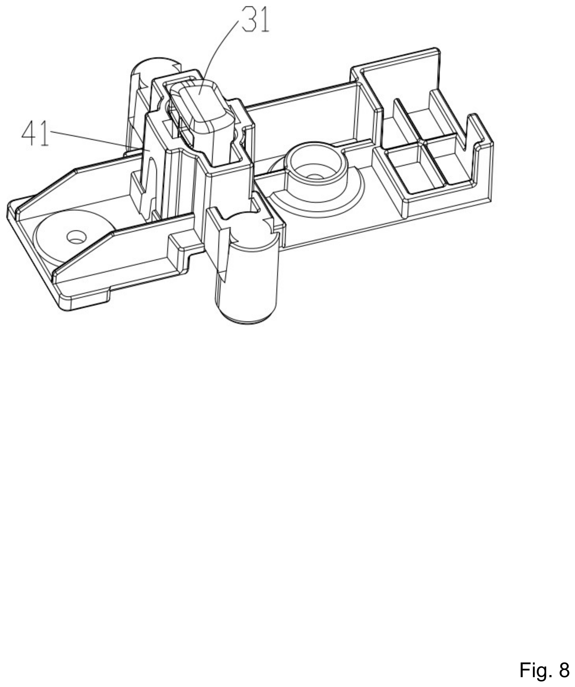

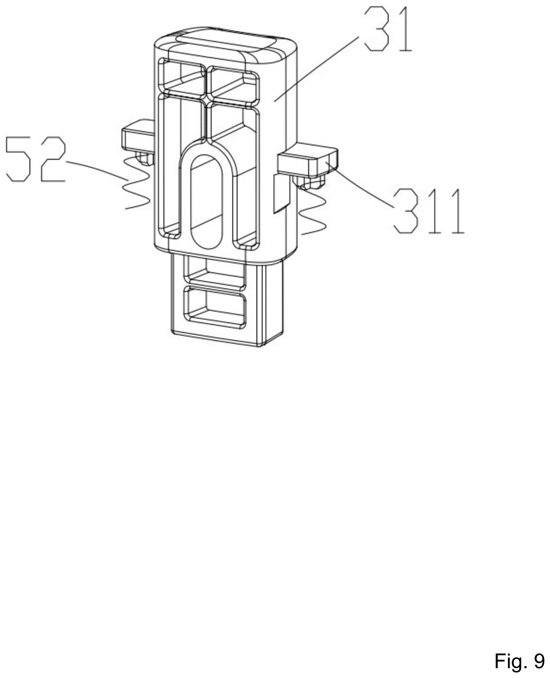

As shown in FIGs. 1-15, an anti-reverse mounting base structure 1 for an infant vehicle seat is proposed. The infant vehicle seat comprises the base structure 1 and a placement structure, where the placement structure is mounted on the base structure 1. The base structure 1 includes a chassis 11 and a rotating assembly 12 provided with a pressure block assembly 3. The pressure block assembly 3 is mounted movably up and down on the rotating assembly 12. When the placement structure is mounted on the base structure 1, it drives the pressure block assembly 3 to move downward. The chassis 11 is provided with a mounting slot 111 at a side close to a front end of the chassis 11 and forms a blocking surface 112 at a side close to a rear end of the chassis 11. The mounting slot 111 is configured to engage with the pressure block assembly 3 moving downward to mount the placement structure on the base structure 1. The blocking surface 112 is configured to prevent the pressure block assembly 3 from moving downward, thereby restricting the placement structure from being mounted on the base structure 1.

For the anti-reverse mounting base structure 1 proposed by the present invention, the placement structure is placed on the base structure 1, the pressure block assembly 3 moves downward at the rotating assembly 12. When the placement structure is correctly oriented on the base structure 1, the pressure block assembly 3 moves downward and extends into the mounting slot 111 to mount the placement structure on the base structure 1. When the placement structure is incorrectly oriented on the base structure 1, the pressure block assembly 3 will contact the blocking surface 112 during downward movement, and then the blocking surface 112 restricts the pressure block assembly 3 from further moving downward, which results in that the placement structure cannot be placed on the base structure 1, thereby avoiding safety incidents.

For the anti-reverse mounting base structure 1 proposed by the present invention, when the placement structure is oriented correctly, it is mounted by a downward movement of the pressure block assembly 3 engaging with the mounting slot 111 of the chassis 11. When the placement structure is oriented incorrectly, the blocking surface 112 restricts the downward movement of the pressure block assembly 3, thereby preventing the placement structure from being placed on the base structure. This ensures that the placement structure is mounted on the base structure in a correct orientation, thereby avoiding situations where the placement structure is mounted in an incorrect direction or in reverse to cause safety accidents.

In this embodiment, the placement structure comprises a carrying basket or a seat body of a safety seat.

In this embodiment, a bump is formed at a bottom of the placement structure.

When the placement structure engages with the base structure for mounting in a correct orientation, the bump at the bottom of the placement structure will press against the pressure block assembly, causing the pressure block assembly to move downward and enabling the placement structure to be mounted on the base structure. Conversely, when the placement structure engages with the base structure for mounting in an incorrect orientation, the bump at the bottom of the placement structure will press against the pressure block assembly, but since the pressure block assembly cannot move downward, it will resist the bump, thereby preventing the placement structure from being mounted on the base structure. This ensures the correct orientation during the placement and mounting process of the placement structure, avoiding the situation where re-mounting is required due to the discovery of mounting errors only after the completion of mounting work, thus saving mounting time and effort.

When mounting a safety seat or infant carrier in a vehicle, due to the young age of a baby, the safety seat or infant carrier must be oriented towards a backrest of a vehicle seat, called rearward facing. For the anti-reverse mounting base structure proposed by the present invention, a detachable connection between the placement structure and the base structure ensures that the placement structure can be mounted on the base structure in a correct orientation once the base structure is secured to the vehicle seat.

The pressure block assembly 3 includes a pressure block 32 and a driving block 31; the driving block 31 is disposed above the pressure block 32, with one end of the driving block 31 facing the placement structure and the other end thereof in contact with the pressure block 32; and the driving block 31 is configured to come into contact with the placement structure and drive the pressure block 32 to move downward.

In this embodiment, a top end face of the driving block 31 faces the placement structure, and a bottom end face thereof faces the pressure block 32 and comes into contact with the pressure block 32.

The rotating assembly 12 includes a base cover body 121 and a turntable 122 connected with each other; the turntable 122 is disposed at an end close to the chassis 11, while the base cover body 121 is disposed at an end away from the chassis 11; the pressure block 32 is disposed at the turntable 122 and can move up and down at the turntable 122; and the driving block 31 is disposed at the base cover body 121 and can move up and down at base cover body 121.

In this embodiment, the base cover body 121 and the turntable 122 are fixedly connected together.

In this embodiment, the base cover body 121 is provided with a connecting portion 120, and the connecting portion 120 is configured to connect with the placement structure. The connection portion can be as shown in EP4414213A1 of applicant.

In some embodiments, the connecting portion 120 is a buckle.

A pressure block seat 42 is provided at the turntable 122, and the pressure block 32 is mounted movably up and down on the pressure block seat 42; and a driving block seat 41 is provided at the base cover body 121, and the driving block 31 is mounted movably up and down on the driving block seat 41.

A first reset spring is provided at the pressure block seat 42, with one end of the first reset spring in contact with the pressure block seat 42 and the other end thereof in contact with the pressure block 32 to drive the pressure block 32 to move upward.

A perforation 321 is formed in the pressure block 32, and a limit post 422 extends from the pressure block seat 42 towards the perforation. The limit post 422 is inserted through the perforation 321, and by the engagement of the limit post 422 with the perforation 321, downward and upward movement distances of the pressure block 32 can be restricted.

The first reset spring 51 has a lower end in contact with the limit post 422 and an upper end in contact with a top end of the perforation 321, enabling it to drive the pressure block 32 to move upward, that is, driving the pressure block 32 to move upward and reset when the pressure block 32 is pressed downward.

A second reset spring 52 is provided at the driving block seat 41, with one end of the second reset spring 52 in contact with the driving block seat 41 and the other end thereof in contact with the driving block 31 to drive the driving block 31 to move upward. In this embodiment, a mounting cavity is formed at the driving block seat 41, and a protruding block 311 extends from the driving block 31 towards the mounting cavity. One end of the second reset spring 52 is in contact with the protruding block 311, and the other end thereof is in contact with a bottom of the mounting cavity, thereby driving the driving block 31 to move upward, that is, driving the driving block 31 to move upward and reset under an action of the second reset spring when the driving block 31 moves downward.

The turntable 122 is rotatably mounted on the chassis 11, and a wall 110 of the mounting slot 111 abuts against the pressure block 32 to restrict the turntable 122 from rotating. The wall of the mounting slot 111 can restrict the rotation angle of the turntable 122.

The mounting slot 111 is arc-shaped with an arc angle of 180° to 270°.

The blocking surface 112 is arc-shaped with an arc angle of 90° to 180°.

The mounting slot 111 and the blocking surface 112 are both disposed on an end face of the chassis 11 facing the rotating assembly 12.

In this embodiment, the arc shape of the mounting slot 111 and the blocking surface 112 enables them to be enclosed to form a complete circular ring. That is, the mounting slot 111 and the blocking surface 112 have the same arc radius.

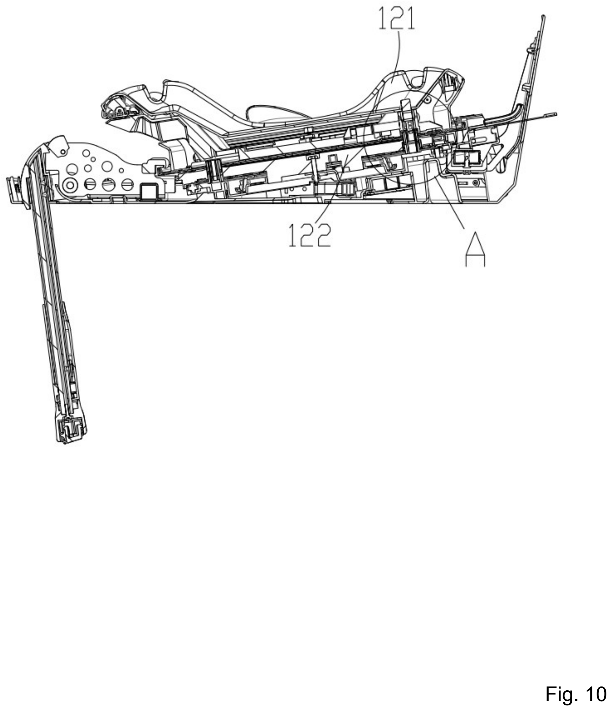

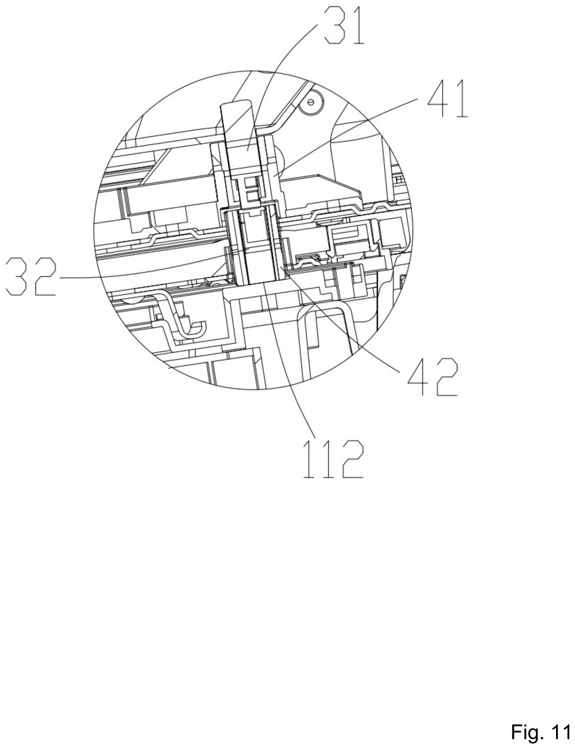

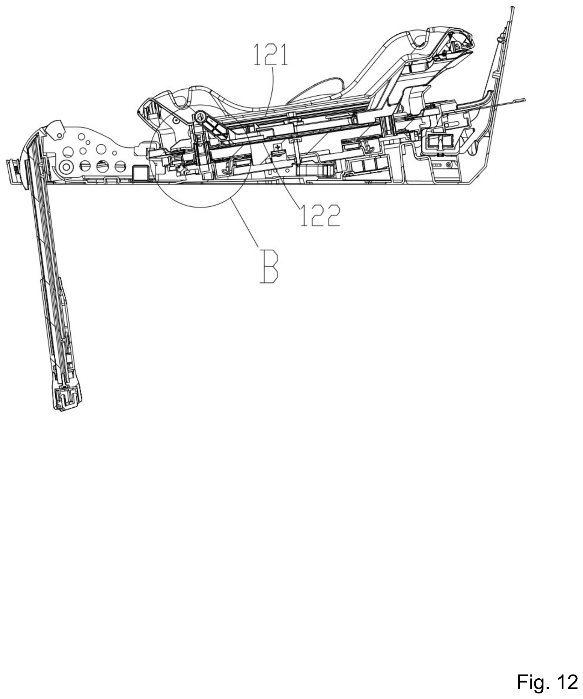

As can be seen in FIG. 10 and 11, the driving block 31 and pressure block 42 are opposite the blocking surface 112. The driving block 31 and pressure block 42 are in an upper position. When mounting a placement structure on the turntable 122, it will be mounted with a front side of the placement structure located on the front side (on the left in FIG. 12) of the turntable 122. The child sitting in the placement structure will look in the forward-facing direction. By trying to mount the placement structure on the turntable 122, the placement structure will push on the driving block 31 to move it downwardly. However, as soon as the pressure block 42 hits the blocking surface 112, further downward movement of the driving block 31 and pressure block 42 as well as of the placement structure is being prevented by the blocking surface 112. So that it will not be possible to mount the placement structure on the base structure 1. So, when the turntable 122 is in a position whereby the placement structure would be mounted in the undesired forward-facing direction, the driving block 31 and pressure block 42 being in an upper position opposite the blocking surface 112, will prevent the mounting of the placement structure on the turntable 122.

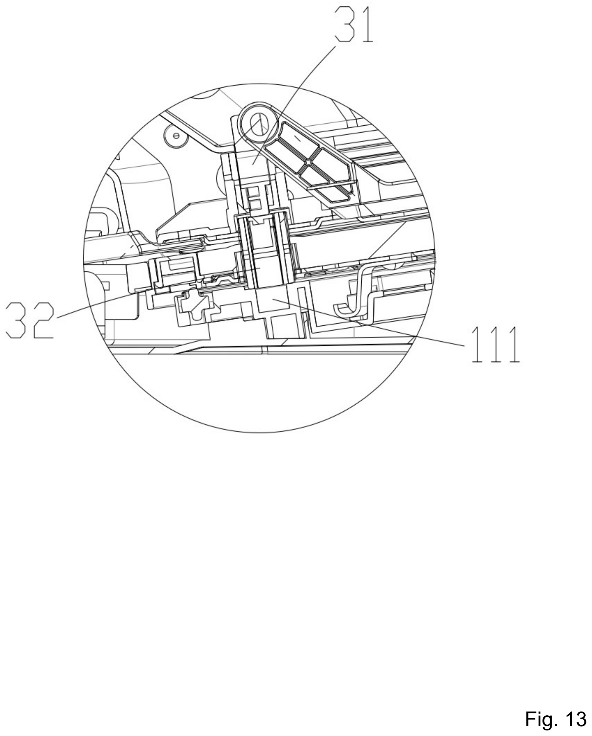

As can be seen in FIG. 12 and 13, the driving block 31 and pressure block 42 are opposite the mounting slot 111. As can be seen the turntable 122 has been rotated over 180 degrees with respect to the orientation as shown in FIG. 10. By the base structure 1 and shown in FIG 12 and 13, no placement structure has been mounted on the base structure 1.

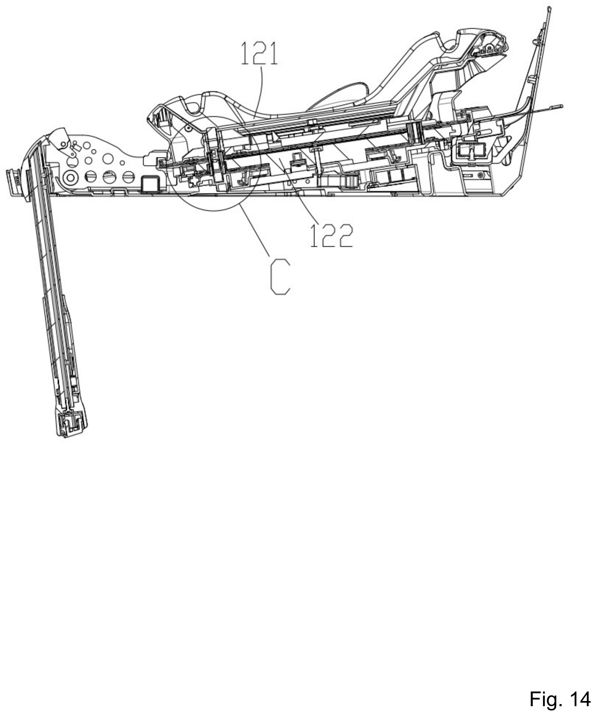

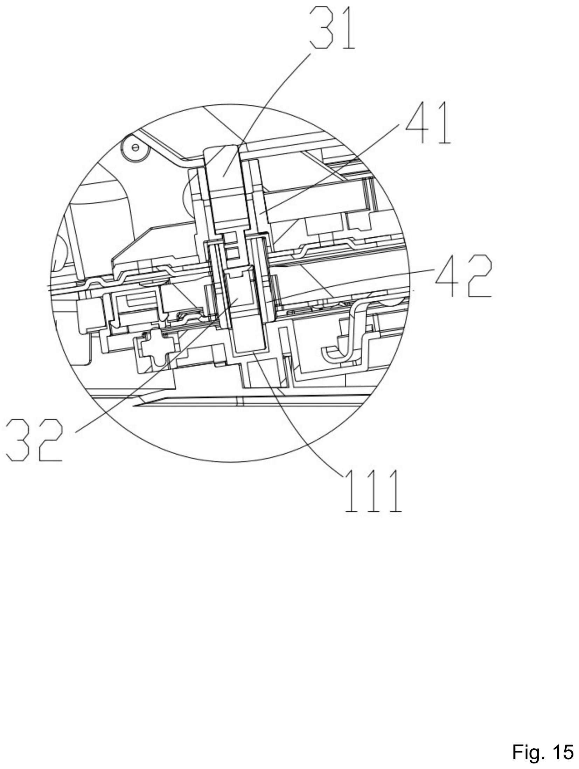

As can be seen in FIG. 14 and 15, the driving block 31 and pressure block 42 are opposite the mounting slot 111. When mounting a placement structure on the turntable 122, it will be mounted with a front side of the placement structure located on the rear side (on the right in FIG. 14) of the turntable 122. The child sitting in the placement structure will look in the rearward facing direction. When mounting the placement structure on the turntable 122, the placement structure will push on the driving block 31 to move it together with the pressure block 42 downwardly until the pressure block 42 hits the mounting slot 111 (see FIG. 15) preventing further downward movement of the driving block 31 and pressure block 42. In this position of the driving block 31 and pressure block 42, placement structure is mounted on the base structure 1 and can be locked thereto by connection portion 120. So, when the turntable 122 is in a position whereby the placement structure would be mounted in the desired rearward-facing direction, the driving block 31 and pressure block 42 being in an upper position opposite the mounting slot 111, will be able to be moved downwardly and allowing the correct mounting of the placement structure on the turntable 122. Furthermore, when rotating the turntable 122 with the placement structure mounted thereon, the driving block 31 and pressure block 42 being in a downward lower position will at a certain degree of rotation come in abutment with the wall 110, preventing the turntable 122 with the placement structure mounted thereon to be rotated to the forward-facing position.

The pressure block assembly has thus two functions: preventing mounting of the placement structure on the turntable being in the wrong orientation and preventing a correctly mounted placement structure on the turntable to be rotated to the forward-facing position.

The above-described preferred implementation manners should be regarded as illustrative examples of the implementation manners of the present application. Any technical deductions, replacements, improvements, or the like that are identical or similar to the present application or made based on the present application should be considered within the scope of protection of the present application.

### List of references

- 1: base structure
- 3: pressure block assembly
- 11: chassis
- 12: rotating assembly
- 31: driving block
- 32: pressure block
- 41: driving block seat
- 42: pressure block seat
- 51: first reset spring
- 52: second reset spring
- 110: wall
- 111: mounting slot
- 112: blocking surface
- 121: base cover body
- 122: turntable
- 120: connecting portion
- 311: protruding block
- 321: perforation
- 422: limit post

## Claims

1. An anti-reverse mounting base structure (1) for an infant vehicle seat comprising the base structure (1) and a placement structure like an infant seat or an infant carrier, wherein the placement structure is detachably mountable on the base structure (1), which base structure (1) comprises a chassis (11) and a rotating assembly (12) provided with a pressure block assembly (3), which pressure block assembly (3) is mounted movably up and down on the rotating assembly (), which chassis () is provided with a mounting slot (111) and a blocking surface (112), whereby when mounting the placement structure on the base structure (1), the pressure block assembly (3) is opposite the mounting slot (111) or the blocking surface (112), wherein the mounting slot (111) is configured to engage with the pressure block assembly (3) moving downward by the placement structure to mount the placement structure on the base structure (1), and wherein the blocking surface (112) is configured to prevent the pressure block assembly (3) from moving downward by the placement structure, thereby restricting the placement structure from being mounted on the base structure (1).

2. Base structure (1) of claim 1, wherein the pressure block assembly (3) comprises a pressure block (32) and a driving block (31), which driving block (31) is disposed above the pressure block (32), with one end of the driving block (31) facing the placement structure and the other end thereof in contact with the pressure block (32); and the driving block (31) is configured to come into contact with the placement structure and drive the pressure block (32) to move downward.

3. Base structure (1) of claim 2, wherein the rotating assembly (12) comprises a base cover body (121) and a turntable (122) connected with each other, which turntable (122) is disposed at an end close to the chassis (11),the pressure block (32) is disposed at the turntable (122) and the driving block (31) is disposed at the base cover body (121).

4. Base structure (1) of claim 3, wherein a pressure block seat (42) is provided at the turntable (122), and the pressure block (32) is mounted movably up and down on the pressure block seat (42); and a driving block seat (41) is provided at the base cover body (121), and the driving block (31) is mounted movably up and down on the driving block seat (41).

5. Base structure (1) of claim 4, wherein a first reset spring (51) is provided at the pressure block seat (42), with one end of the first reset spring (51) in contact with the pressure block seat (42) and the other end thereof in contact with the pressure block (32) to drive the pressure block (32) to move upward.

6. Base structure (1) of claim 4, wherein a second reset spring (52) is provided at the driving block seat (41), with one end of the second reset spring (52) in contact with the driving block seat (41) and the other end thereof in contact with the driving block (31) to drive the driving block (31) to move upward.

7. Base structure (1) of claim 3, wherein the turntable (122) is rotatably mounted on the chassis (11), and a wall (110) of the mounting slot (111) abuts against the pressure block (32) to restrict the turntable (122) from rotating.

8. Base structure (1) of claim 1 or 7, wherein the mounting slot (111) is arc-shaped with an arc angle of 180° to 270°.

9. Base structure (1) of claim 1, wherein the blocking surface (112) is arc-shaped with an arc angle of 90° to 180°.
